(19) **Europäisches Patentamt**
**European Patent Office**
**Office européen des brevets**

(11) **EP 2 154 841 B1**

(12) **EUROPEAN PATENT SPECIFICATION**

(45) Date of publication and mention
of the grant of the patent:
**27.08.2014 Bulletin 2014/35**

(51) Int Cl.:
**H04L 12/701** *(2013.01)*    **H04L 12/801** *(2013.01)*

(21) Application number: **08715413.4**

(22) Date of filing: **08.04.2008**

(86) International application number:
**PCT/CN2008/070681**

(87) International publication number:
**WO 2008/148315 (11.12.2008 Gazette 2008/50)**

(54) **A METHOD AND SYSTEM FOR ESTABLISHING SERVICE PATH, AND A NODE DEVICE**

VERFAHREN UND SYSTEM ZUR FESTLEGUNG EINES DIENSTPFADES UND KNOTENEINRICHTUNG

PROCÉDÉ ET SYSTÈME SERVANT À ÉTABLIR UN CHEMIN DE SERVICE, ET DISPOSITIF DE NOEUD

(84) Designated Contracting States:
**AT BE BG CH CY CZ DE DK EE ES FI FR GB GR HR HU IE IS IT LI LT LU LV MC MT NL NO PL PT RO SE SI SK TR**

(30) Priority: **07.06.2007  CN 200710108931**

(43) Date of publication of application:
**17.02.2010  Bulletin 2010/07**

(73) Proprietor: **Huawei Technologies Co., Ltd.**
**Longgang District, Shenzhen**
**Guangdong 518129 (CN)**

(72) Inventors:
- **WANG, Guangjun**
**Shenzhen, Guangdong 518129 (CN)**
- **QIN, Tao**
**Shenzhen, Guangdong 518129 (CN)**

- **LUO, Huichang**
**Shenzhen, Guangdong 518129 (CN)**

(74) Representative: **Isarpatent**
**Patent- und Rechtsanwälte**
**Postfach 44 01 51**
**80750 München (DE)**

(56) References cited:
**WO-A2-2006/119010    CN-A- 1 409 526**
**CN-A- 1 625 141    CN-A- 1 960 341**
**JP-A- 2004 343 199    US-A1- 2005 117 512**

- **AYAN BANERJEE ET AL: "General Multiprotocol Label Switching: An Overview of Routing and Management Enhancements", IEEE COMMUNICATIONS MAGAZINE, IEEE SERVICE CENTER, PISCATAWAY, US, vol. 39, no. 1, 1 January 2001 (2001-01-01), pages 144-150, XP011091417, ISSN: 0163-6804**

**Description**

**FIELD OF THE TECHNOLOGY**

The present invention relates to the field of communication technologies, and more particularly to a method, a system, and a node device for establishing a service path in a mesh network.

**BACKGROUND OF THE INVENTION**

In the prior art, a synchronous digital hierarchy (SDH), synchronous optical network (SONET) data, and an optical transport network (OTN) are conventionally designed to transfer voice services.

With the rapid development of data services, in order to meet the demands of transferring data services, the network connection manner needs to transit from the statically provided permanent connection to the soft permanent connection and the signaling-based switching connection. The novel OTN is called an "automatically switched optical network (ASON)" by the International Telecommunication Union-Telecommunication Standardization Sector (ITU-T). For the main realizing manner, a control plane is introduced for establishing, modifying, and maintaining the network connection, and resuming the connection under network failure conditions.

The ASON includes three planes, namely, a service plane, a control plane, and a management plane. The service plane is adapted to realize a practical connection relation (Bridge Switch) and transferring of the service, which basically realizes the functions of the conventional SDH, the SONET, and the OTN. The control plane mainly uses the realizing manner of the switching network as a reference, and establishes a service by using the signaling under the support of the routing function. The management plane is mainly adapted to realize a network management function. The main realizing manner of the signaling in the ASON on the control plane is to use a General Multi-Protocol Label Switch (GMPLS) protocol developed by the Internet Engineering Task Force (IETF). The applied routing protocol is an Open Shortest Path First-Traffic Engineering (OSPF-TE) protocol.

The ASON provides abundant service level agreements (SLAs) for a user, for example, a "1+1" service, a multiplex section service, a re-routing service, a non-protection service, and a preempted service. The first three services aim at requiring that the services are protected or can be resumed. The resuming function after the failure occurs, that is, the re-routing function is the main feature of the ASON. The realization is described in the following. When a service path fails, a node neighboring the failed node detects the failure, and notifies the first node of the service. The first node excludes the failed node or link, then re-computes a new path, and then re-establishes the path according to the computed new path. After the path is successfully established, the service is resumed.

In order to improve the protecting and resuming strength of the first two services, usually the "1+1" service and the multiplex section service also have a resuming attribute. That is, the protection on the "1+1" service and the multiplex section service is preferentially performed. If the protection fails, the resuming capability is used, so as to ensure the transmission of the service.

In addition, concatenation services and very important client (VIC) private line services exist in the transmission network, and the establishing or resuming priorities of such services are higher than that of the common services, that is, the services having the high establishing or resuming priorities are preferentially established or resumed, and the services having the high establishing or resuming priorities even preempt the resource of the services having low priorities when the resources are limited, so as to ensure that the high priority services are preferentially established or resumed.

It can be known from the above description that, in the prior art, the node initiating the re-routing classifies and sorts all the re-routing requests, for example, the re-routing requests with high priorities are listed in one queue, and the re-routing requests with low priorities are listed in another queue. The re-routing requests with high priorities are immediately re-routed, and the re-routing requests with low priorities are re-routed after waiting for a period of time, so as to ensure that a resuming time of the services with high priorities is shorter when the link resources are not limited. In addition, as the problem that the flooding of the route and the TE is not on time which results from the resource contention and the services with low resuming priorities does not exist, a resuming success ratio of the services with high resuming priorities is relatively high.

However, during the realization of the present invention, the inventors find that the prior art at least has the following problem. The resuming success ratio cannot be ensured when the link resources are limited, that is, if most of the link resources are used, particularly, some link resources are used by the services with low priorities, the resuming requests with high priorities do not have the idle link resources and cannot preempt the link resources of the services with low priorities, so that the resuming thereof fails.

CN 1 960 341 A discloses a method for service recovery, comprising: Flood usage conditions of all links in a domain via the route protocol, such that each node in the domain may obtain the usage conditions of all links; the usage conditions includes which SLA service uses the link and the recovery priority of the service on the link. When rerouting is needed, a head node of the services needing rerouting receives rerouting requests. Rank the services needing rerouting according to different recovery priority of the services at the head node of the services needing rerouting, i.e. form three First In First Out (FIFO) queues according to high, middle and low recovery priority. A routing unit calculates a path according to the predefined link resource usage condition. A signaling unit initiates to establish the path.

WO 2006/119010 A2 discloses a technique dynamically assigns priorities to traffic engineering (TE) label switched paths (LSPs) from a head-end node of a computer network. Specifically, a head-end node allocates a range of priority values for groups of possible TE-LSP configurations. When requesting a TE-LSP, the head-end node attempts to establish the TE-LSP by dynamically increasing a priority value of the TE-LSP within the corresponding range of priority values until adequate resources are available, at which time the head-end node may establish the TE-LSP Upon expiration of a configurable timer, the head-end node dynamically decreases the priority value of the established TE-LSP within the corresponding range of priority values and determines whether the established TE-LSP can lower its priority yet still obtain adequate re sources along a path with an acceptable cost. If so, the head-end node may reestablish the TE-LSP at the lower priority value. In the event the head-end node E is configured to soft preempt, one or more remote head-end nodes (node C) of the soft-preempted TE-LSPs (T2) may send a notification indicating a burden on the remote head-end node to reroute its soft-preempted TE-LSP(s). If the head-end node receives too many complaints, it may retract the soft-preemption, such as by sending an explicit retraction message known to those skilled in the art.

## SUMMARY OF THE INVENTION

Accordingly, the present invention is directed to a method, a system, and a node device for establishing a service path, which are applicable to effectively ensure establishing or resuming of a service.

In an embodiment, the present invention provides a method for establishing a service path, which includes the following steps.

A new path establishing request or a re-routing request is received.

A link resource using situation and user-configured information are acquired, in which the link resource using situation at least includes a link resource occupancy situation, a situation of the link resource used by priority services, a situation of the link resource used by a label switching path (LSP), and a concatenation hierarchy of the LSP occupying the link resource.

A path is computed according to the link resource using situation and the user-configured information, so as to acquire display routing information; wherein the path is computed by adopting a relative capability loss, RCL, routing algorithm, and the routing algorithm adopts a formula:

$$\text{RCL value} =$$

$$\cdot \sum_{i=1}^{l} (\text{variable} 1 \times \text{concatenation hierarchy of } i^{\text{th}} \text{ to be preempted } LSP \text{ with different concatenation hierarchies})$$

$$+ \sum_{i=1}^{m} (\text{constant} 1 / i^{\text{th}} \text{ hop available bandwidth} + \sum_{i=1}^{n} (\text{variable} 2 \times \text{priority of } i^{\text{th}} \text{ to be preempted } LSP)$$

$$+ (\text{constant } 2 \times \text{hop count } p), \text{ wherein}$$

wherein
RCL represents a relative capability loss; 1 represents an amount of LSPs having different concatenation hierarchies to be preempted, m represents an available bandwidth of used idle links, n represents an amount of all LSPs to be preempted, comprising LSPs having the same concatenation hierarchy and the LSPs having different concatenation hierarchies, and p represents a total hop count; variable 1 and variable 2 are the user-configured information according to a preemption policy; and constant 1 and constant 2 are constant values, wherein the display routing information is display routing information of a path having a minimum RCL value.

A path establishing command is sent according to the display routing information, and the service path is established according to the path establishing command.

In an embodiment, the present invention also provides a system for establishing a service path, which includes a user, a protocol control unit, and a service node.

The user is adapted to send a new path establishing request and user-configured information.

The protocol control unit is adapted to flood a link resource using situation and send a re-routing request, in which the link resource using situation at least includes a link resource occupancy situation, a situation of the link resource used by priority services, a situation of the link resource used by an LSP, and a concatenation hierarchy of the LSP occupying the link resource.

The service node is connected to the protocol control unit and is adapted to receive the new path establishing request or the re-routing request, compute a path according to the acquired link resource using situation and user-configured information, so as to acquire display routing information, send a path establishing command according to the display routing information, and establish the service path according to the path establishing command; wherein the path is computed by adopting a relative capability loss, RCL, routing algorithm, and the routing algorithm adopts a formula:

$$\text{RCL value=}$$

$$\cdot \sum_{i=1}^{l} (\text{variable} 1 \times \text{concatenation hierarchy of } i^{\text{th}} \text{ to be preempted } LSP \text{ with different concatenation hierarchies})$$

$$+ \sum_{i=1}^{m} (\text{constant} 1 / i^{\text{th}} \text{ hop available bandwidth} + \sum_{i=1}^{n} (\text{variable} 2 \times \text{priority of } i^{\text{th}} \text{ to be preempted } LSP)$$

$$+ (\text{constant } 2 \times \text{hop count p}),$$

wherein
RCL represents a relative capability loss; 1 represents an amount of LSPs having different concatenation hierarchies to be preempted, m represents an available bandwidth of used idle links, n represents an amount of all LSPs to be preempted, comprising LSPs having the same concatenation hierarchy and the LSPs having different concatenation hierarchies, and p represents a total hop count; variable 1 and variable 2 are the user-configured information according to a preemption policy; and constant 1 and constant 2 are constant values, wherein the display routing information is display routing information of a path having a minimum RCL value.

In an embodiment, the present invention further provides a node device, which includes a signaling unit, a routing unit, and a connection management unit.

The signaling unit is adapted to receive a new path establishing request or a re-routing request, and trigger to send a path computation request, and adapted to receive display routing information acquired after the path is computed, and send a path establishing command according to the display routing information.

The routing unit is adapted to receive the path computation request, acquire a link resource using situation and user-configured information, compute the path according to the link resource using situation and the user-configured information, so as to acquire the display routing information, and transfer the display routing information to the signaling unit, in which the link resource using situation at least includes a link resource occupancy situation, a situation of the link resource used by priority services, a situation of the link resource used by an LSP, and a concatenation hierarchy of the LSP occupying the link resource; wherein the path is computed by adopting a relative capability loss, RCL, routing algorithm, and the routing algorithm adopts a formula:

$$\text{RCL value=}$$

$$\cdot \sum_{i=1}^{l} (\text{variable} 1 \times \text{concatenation hierarchy of } i^{\text{th}} \text{ to be preempted } LSP \text{ with different concatenation hierarchies})$$

$$+ \sum_{i=1}^{m} (\text{constant} 1 / i^{\text{th}} \text{ hop available bandwidth} + \sum_{i=1}^{n} (\text{variable} 2 \times \text{priority of } i^{\text{th}} \text{ to be preempted } LSP)$$

$$+ (\text{constant } 2 \times \text{hop count p}),$$

wherein

RCL represents a relative capability loss; 1 represents an amount of LSPs having different concatenation hierarchies to be preempted, m represents an available bandwidth of used idle links, n represents an amount of all LSPs to be preempted, comprising LSPs having the same concatenation hierarchy and the LSPs having different concatenation hierarchies, and p represents a total hop count; variable 1 and variable 2 are the user-configured information according to a preemption policy; and constant 1 and constant 2 are constant values, wherein the display routing information is display routing information of a path having a minimum RCL value.

The connection management unit is adapted to receive the path establishing command, and establish a service path.

For the beneficial effects of the embodiments of the present invention, according to the link resource using situation and the user-configured information, a situation that the establishing or resuming of one service affects a plurality of low priority services is prevented. The preemption between the concatenation services with different hierarchies is realized, so that a success ratio of establishing or resuming the high priority services is ensured when the link and node resources are limited. According to a relative capability loss (RCL) routing algorithm, when the preemption may affect a plurality of LSPs having the same concatenation hierarchy and a plurality of LSPs having different concatenation hierarchies, the user is enabled to consider and balance between the situation of focusing on the success ratio of establishing or resuming the high priority services and the situation of reducing the possible effects on existing services.

## BRIEF DESCRIPTION OF THE DRAWINGS

FIG. 1 is a flow chart of a method for establishing a service path according to an embodiment of the present invention;

FIG. 2 is a schematic structural view of a system for establishing a service path according to an embodiment of the present invention; and

FIG. 3 is a schematic view of a mesh networking architecture.

## DETAILED DESCRIPTION OF THE EMBODIMENTS

In order to make the objectives, technical solutions, and advantages of the present invention more comprehensible, the present invention is further described in detail below with reference to embodiments and the accompanying drawings. The embodiments of the present invention are merely intended to demonstrate and illustrate the present invention, instead of limiting the scope of the present invention.

The embodiments of the present invention provide a method and a system for establishing a service path, and a node device. The present invention is described as follows in detail with reference to the accompanying drawings.

Embodiment 1

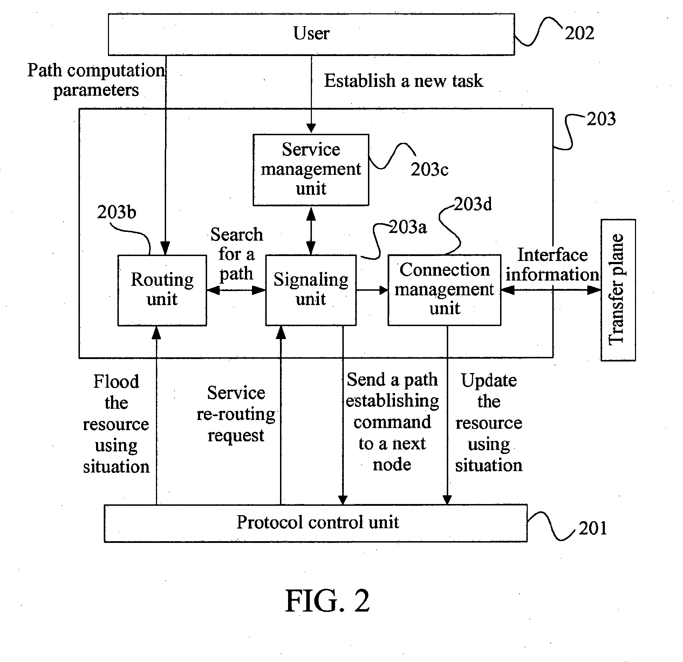

FIG. 2 is a schematic structural view of a system for establishing a service path according to an embodiment of the present invention. Referring to FIG. 2, the system includes a user 202, a protocol control unit 201, and a service node 203.

The user 202 is adapted to send a new path establishing request and user-configured information.

The protocol control unit 201 is adapted to flood a link resource using situation, and send a re-routing request, in which the link resource using situation at least includes a link resource occupancy situation, a situation of the link resource used by priority services, a situation of the link resource used by an LSP, and a concatenation hierarchy of the LSP occupying the link resource.

The service node 203 is connected to the protocol control unit 201, and is adapted to receive the new path establishing request or the re-routing request, compute a path according to the acquired link resource using situation and user-configured information, so as to acquire display routing information, send a path establishing command according to the display routing information, and establish a service path according to the path establishing command.

Through this embodiment, a problem that the establishing or resuming of a service affects a plurality of low priority services is solved according to the link resource using situation and the user-configured information. The preemption between the concatenation services with different hierarchies is realized, so that a success ratio of establishing or resuming the high priority services is ensured when link and node resources are limited.

In this embodiment, referring to FIG. 2, the service node further includes a service first node 203 and at least one downstream node (not shown in the figure) on a path of the service first node 203.

The service first node 203 at least includes a signaling unit 203a, a routing unit 203b, and a connection management unit 203d. The signaling unit 203a is adapted to receive the new path establishing request or the re-routing request, trigger the sending of a path computation request, and send the path establishing command according to the received display routing information. The routing unit 203b is adapted to receive the path computation request, acquire the link resource using situation and the user-configured information, compute a path according to the link resource using situation and the user-configured information, so as to acquire the display routing information, and transfer the display routing information to the signaling unit 203a. The connection management unit 203d is adapted to receive the path establishing command, and establish the service path. The protocol control unit 201 is further adapted to receive and forward the path establishing command.

The downstream node (not shown in the figure) is adapted to receive the path establishing command forwarded by the protocol control unit 201, and establish the service path.

The service first node 203 further includes: a service management unit 203c, connected to the signaling unit 203a, adapted to receive the new path establishing request from the user, and transfer the new path establishing request to the signaling unit 203a.

In this embodiment, the downstream node (not shown in the figure) on the path of the service first node 203 at least includes a downstream node signaling unit and a downstream node connection management unit. The downstream node signaling unit is adapted to receive the path establishing command forwarded by the protocol control unit 201, and send the path establishing command. The downstream node connection management unit is adapted to receive the path establishing command transferred by the downstream node signaling unit, and establish the service path.

In this embodiment, all the link resource using situations in a domain are flooded through a routing protocol of the protocol control unit 201, so that each node in the domain knows the using situations of all the resources in the MESH network.

The link resource using situation at least includes:

the link resource occupancy situation, that is, whether the link resource is used;

the situation of the link resource used by priority services, that is, the situation that the link resource is used by which priority service to be established or resumed;

the situation of the link resource used by the LSP, that is, the situation that the link resource is used by which LSP; and

the concatenation hierarchy of the LSP occupying the link resource, in which the priority services are divided into high priority services, medium priority services, and low priority services, where the high priority services preempt the low priority services, and the medium priority services cannot preempt the others and cannot be preempted.

Referring to Table 1, the information about the resource preemption by the priority services is described as follows by taking a virtual container (VC)-4 service and a VC-4 concatenation service of an STM-64 as an example.

In Table 1, the occupancy situation represents whether the resource is used and the resource is used by which priority service, and the values thereof include unused, or used by a certain priority service to be established or resumed. The establishing or resuming priorities are divided into high, medium, and low levels, in which the high priority services may preempt the low priority services when the resources are limited, and the medium priority services cannot preempt the others and cannot be preempted. In this manner, the circular preemption may be prevented.

Table 1

| Information to be flooded / Time slot sequence | Occupancy situation | Occupied LSP id | Concatenation situation |
|---|---|---|---|
| First VC-4 | High priority resuming | LSP1 | Non-concatenation |
| Second VC-4 | Unused | LSP2 | Non-concatenation |
| Third VC-4 | Medium priority resuming | LSP3 | Non-concatenation |
| ................. | ................. | .............. ... | .............. ... |
| 64th VC-4 | Low priority resuming | LSP8 | VC4-4c |

The occupied LSP id (Identification) represents that the time slot is used by which LSP. During the path computation, a situation that a high priority service affects a plurality of low priority services can be prevented. For example, a path of a high priority service that is successfully resumed after the re-routing is ABCDEE If the preemption design is unreasonable, the following situation may occur, that is, the BC segment is a part of a low priority service GBCH, and the DE segment may be a part of another low priority service IDEJK, and thus, the resuming of one high priority resuming service may affect two low priority services. If the two low priority services have a re-routing attribute, the re-routing of the two services may be successful, but unfortunately, a network oscillation may also occur. If the two low priority services do not have the re-routing attribute, the two services are sacrificed.

The concatenation situation is adapted to show whether the service using the time slot is a concatenation service, and whether the preemption between the services having the same concatenation or different concatenations is supported.

In this embodiment, the user-configured information includes path computation parameters configured by the user 202.

In this embodiment, the path computation unit 203b computes the path by adopting an RCL routing algorithm according to the link resource using situation and the path computation parameters configured by the user, and returns the display routing information of a path having a minimum RCL value to the signaling unit 203a.

In this embodiment, the routing unit 203b may adopt a formula as follows:

RCL value=

$$\cdot \sum_{i=1}^{l}(\text{variable}1 \times \text{concatenation hierarchy of } i^{th} \text{ to be preempted } LSP \text{ with different concatenation hierarchies})$$

$$+ + \sum_{i=1}^{m}(\text{constant}1 / i^{th} \text{ hop available bandwidth} + \sum_{i=1}^{n}(\text{variable}2 \times \text{priority of } i^{th} \text{ to be preempted} LSP)$$

$$+ (\text{constant } 2 \times \text{hop count p})$$

In the above formula, RCL represents a relative capability loss.

In the above formula, 1 represents an amount of LSPs having different concatenation hierarchies to be preempted; m represents an available bandwidth of used idle links; n represents an amount of all the LSPs to be preempted, including the LSPs having the same concatenation hierarchy and the LSPs having different concatenation hierarchies; and p represents a total hop count.

Variable 1 and variable 2 are the user-configured information, which are the path computation parameters configured by the user 202 in this embodiment. When the preemption may affect a plurality of LSPs having the same concatenation hierarchy and a plurality of LSPs having different concatenation hierarchies, the user is enabled to consider and balance between the situation of focusing on the success ratio of establishing or resuming the high priority services and the situation of reducing the possible effects on existing services.

Constant 1 and constant 2 are constant values.

In this embodiment, the path may be computed by adopting a centralized path computation manner, for example, by using a path computation server (PCS). Alternatively, a distributed path computation manner may also be adopted, that is, when the distributed path computation manner is adopted, each downstream node at least includes a routing unit adapted to compute the path.

In the system according to the embodiments of the present invention, firstly, the protocol control unit 201 floods all the link resource using situations in the domain through the routing protocol, and the user 202 configures the path computation parameters, in which the link resource using situation has been described above, so it is not described here.

When a service is established or a certain service is re-routed, the service first node 203 receives a path establishing request and a re-routing request. Specifically, when a service is established, the user 202 sends a new path establishing request to the service first node 203, and the service management unit 203c of the service first node 203 transfers the request to the signaling unit 203a. When a certain service is re-routed, the protocol control unit 201 sends the re-routing request to the signaling unit 203a of the service first node.

After receiving the request, the signaling unit 203a of the service first node sends a path computation request to the routing unit 203b to apply for path computation. The routing unit 203b computes a path by adopting the RCL routing algorithm according to the link resource using situation and the user-configured information, that is, the path computation parameters, and then returns display routing information of a path having the minimum RCL value to the signaling unit 203a. Here, the routing algorithm is as shown in the above formula, so it is not described here.

The signaling unit 203a initiates the path establishment according to the returned display routing information, that is, sends a path establishing command to the connection management unit 203d and the downstream node on the path of the service first node 203. Then, the path is established through an interaction between the signaling units and the connection management units of the first node and the downstream node on the path of the service first node.

When the connection management unit 203d of the service first node 203 receives the path establishing command, the connection management unit 203d establishes the path. After the signaling unit of the neighboring downstream node receives the path establishing command of the upstream node (the upstream node here is the first node), the signaling unit of the neighboring downstream node transfers the path establishing command to the connection management unit of the downstream node for establishing the path. Then, the downstream node further transfers the path establishing command to the next downstream node. After a corresponding connection management unit of the downstream node establishes the path, the downstream node further transfers the path establishing command to a next downstream node, until the last downstream node of the service establishes the path, so that the service path is established. The process for establishing the path is similar to that in the prior art, so it is not described here.

In this embodiment, during the process of establishing the path by the connection management units of the service first node and the downstream node, the following manner may be adopted. It is determined whether the link of the low priority service is preempted. If the determining result is no, the path is established on an unused link.

If the determining result is yes, the link connection of the preempted low priority service is released, and the path is established on the released link. After the link connection is released, the information about the released link connection is saved, all nodes on the path of the preempted low priority service are notified, an alarm is triggered to be turned off, and a state of the released link is updated to be preempted.

In the embodiments of the present invention, according to the link resource using situation and the user-configured information, the situation that the establishing or resuming of one service affects a plurality of low priority services is prevented. The preemption between the concatenation services having different hierarchies is prevented, so that a success ratio of establishing or resuming high priority services is ensured when the link and node resources are limited. Through the RCL algorithm, when the preemption may affect a plurality of LSPs having the same concatenation hierarchy and a plurality of LSPs having different concatenation hierarchies, the user is enabled to consider and balance between the situation of focusing on the success ratio of establishing or resuming the high priority services and the situation of reducing the possible effects on existing services.

Embodiment 2

The embodiment of the present invention provides a method for establishing a service path. The method includes: receiving a new path establishing request or a re-routing request; acquiring a link resource using situation and user-configured information, in which the link resource using situation at least includes a link resource occupancy situation, a situation of the link resource used by priority services, a situation of the link resource used by an LSP, and a concatenation hierarchy of the LSP occupying the link resource; computing a path according to the link resource using situation and the user-configured information, so as to acquire display routing information; sending a path establishing command according to the display routing information; and establishing the service path according to the path establishing command. The link resource using situation is described in embodiment 1, so it is not described here.

The method for establishing a service path according to the present invention is described by taking the system for establishing a service path according to the first embodiment as an example.

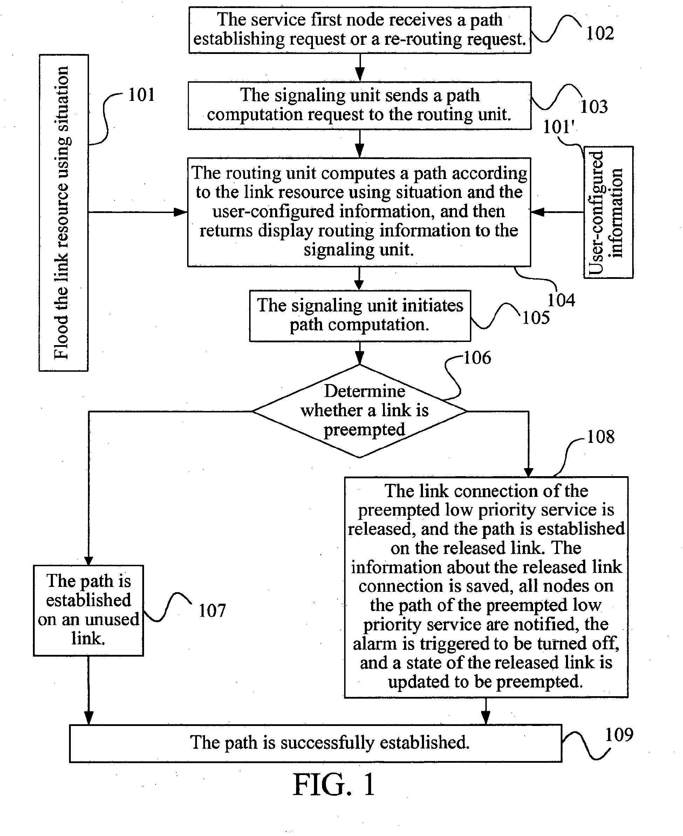

Referring to FIG. 1, the method for establishing a service path includes the following steps.

All the link resource using situations in a domain are flooded through a routing protocol of the protocol control unit 201 (see step 101), so that each node in the domain knows all the link resource using situations in the MESH network, in which the link resource using situation at least includes a situation that whether the link resource is used and is used by which priority service to be established or resumed, a situation that the link resource is used by which LSP, and a concatenation hierarchy of the LSP occupying the link resource. The priority services to be established or resumed are divided into services in three levels, that is, high, medium, and low levels, in which high priority services may preempt the low priority services when the resources are limited, and the medium priority services cannot preempt the others and cannot be preempted. Furthermore, the user 202 presets the user-configured information, that is, path computation parameters in this embodiment.

When a service is established or a certain service is re-routed, the service first node 203 receives a path establishing request or a re-routing request (see step 102). Specifically, when a service is established, the user 202 sends the path establishing request to the service first node, and the service management unit 203c of the service first node transfers the request to the signaling unit 203a. When a certain service is re-routed, the protocol control unit 201 sends the re-routing request to the signaling unit 203a of the service first node.

After receiving the above request, the signaling unit 203a of the service first node sends a path computation request to the path computation unit in the routing unit 203b to apply for path computation (see step 103).

The routing unit 203b computes the path by adopting the RCL routing algorithm according to the received link resource using situation and the user-configured information 101' set by the user, and then returns the display routing information of a path having the minimum RCL value to the signaling unit 203a (see step 104). Here, the user-configured information 101' includes the path computation parameters, which are set by the user 202. The routing algorithm has been shown above, so it is not described here.

The signaling unit 203a initiates a path establishment according to the returned display routing information (see step 105).

In this embodiment, the signaling unit 203a initiates the path establishment according to the returned display routing information, that is, sends a path establishing command to the connection management unit 203d and the downstream node on the path of the service first node. Then, the path is established through an interaction between the signaling units and the connection management units of the service first node and the downstream node on the path of the service first node.

When the connection management unit 203d of the service first node receives the path establishing command, the connection management unit 203d establishes the path. After the signaling unit of the neighboring downstream node receives the path establishing command from the upstream node, the signaling unit of the neighboring downstream node transfers the path establishing command to the connection management unit of the downstream node for establishing the path. Then, the downstream node further transfers the path establishing command to a next downstream node. After a connection management unit of the downstream node establishes the path, the downstream node further transfers the path establishing command to a next downstream node, until the last downstream node of the service establishes the path, so that the service path is established. The process for establishing the path is similar to that in the prior art, so it is not described here.

In this embodiment, the process of establishing the path by the connection management units of the first node and the downstream node includes the following steps.

It is determined whether the link of the service with a low resuming priority is preempted (see step 106).

If a determining result is no, the path is established on an unused link (see step 107), and the path is successfully established (see step 109).

If the determining result in step 106 is yes, the link connection of the preempted low priority service is released, and the path is established on the released link. That is, the current link connection of the preempted low priority service is released on the preempted link, and a new link connection is established according to the path establishing request or the re-routing request.

However, after the link connection is released, the information about the released link connection is saved, all nodes on the path of the preempted low priority service are notified, the alarm is triggered to be turned off, and a state of the released link is updated to be preempted (see step 108). The original connection information is locally reserved, which is adapted to resume the preempted service after the preempting service is deleted or returns to the original route. All the nodes on the path of the preempted low priority service are notified through the signaling, the alarm is turned off, and the state is updated to be preempted. The path is successfully established (see step 109).

In addition, when the preempting service is deleted or returns to the original path, the preempted low priority service is resumed to the link connection before being preempted, all nodes on the path of the preempted low priority service are notified, the alarm is triggered to be turned on, and the state of the resumed link is updated to be un-preempted.

It can be known from the above description that, when the path is computed by flooding the link resource using situation through the routing protocol, the situation that the establishing or resuming of one service affects a plurality of low priority services is prevented. The preemption between the concatenation services having different hierarchies is prevented, so that a success ratio of establishing or resuming high priority services is ensured when the link and node resources are limited. Through the RCL algorithm, when the preemption may affect a plurality of LSPs having the same concatenation hierarchy and a plurality of LSPs having different concatenation hierarchies, the user is enabled to consider and balance between the situation of focusing on the success ratio of establishing or resuming the high priority services and the situation of reducing the possible effects on existing services.

It should be noted that, persons of ordinary skill in the art should understand that all or a part of the steps of the method according to the embodiments of the present invention may be implemented by relevant hardware under the instruction of programs. The program may be stored in a computer readable storage medium. When the program is executed, the steps of the method according to the embodiment of the present invention are performed. The storage medium may be a ROM, a RAM, a magnetic disk, and an optical disk.

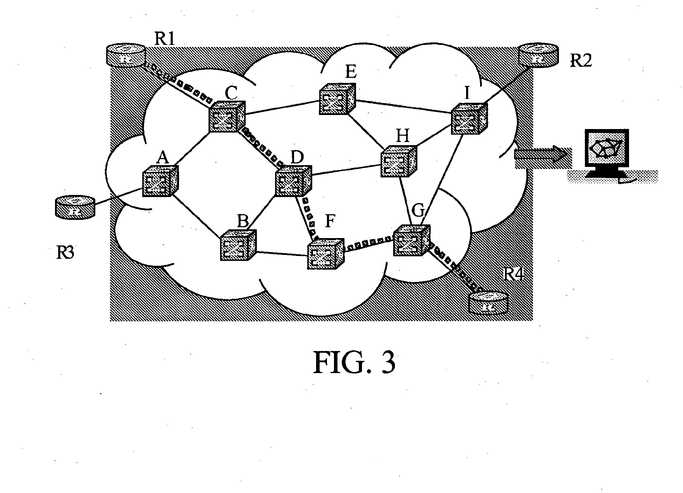

The technical solution is described by an example. FIG. 3 is a schematic view of a mesh networking architecture. Referring to FIG. 3, a VC4 service having an end-to-end re-routing attribute passes a path of C-D-F-G, and a resuming hierarchy of the service is a high level.

When the path C-D-F-G fails, a first node C of the service re-routes the service, and a signaling unit of the first node C requires a new service path. If a centralized path computation mode is adopted, the first node C searches for a path from a path computation server (PCS). The PCS is a routing unit, and is responsible for a path computation function of the whole control domain or a part of the control domain. If a distributed path computation manner is used, one routing unit is set on a control plane of each node and is responsible for path computation. The path computation is based on the link resource using situation flooded by the protocol control unit 201 through the routing protocol, and the link resource using situation includes the TE information using situation after being expanded according to embodiments of the present invention, which has been described above, and is not described here.

The PCS or the path computation unit uses an RCL computation formula according to the embodiments of the present invention, and if a certain path has the minimum RCL value, the path serves as a resuming path of the VC4 service for the path establishment, so as to resume the original interrupted service.

When the RCL value is computed, variable 1 and variable 2 are parameters that may be set by the user. The set values of the two variables identify the user's selection on a preemption policy.

In this embodiment, if the set value of variable 1 is greater than an unset value of variable 1, it represents that the user does not concern the preemption between different concatenation services, but only emphasizes resuming the high priority service, even if the low priority service having a high concatenation hierarchy is lost. If the set value of variable 1 is smaller than an unset value of variable 1, the user-configured parameters are just the opposite.

In this embodiment, the setting of variable 2 identifies the user's attitude on the situation that the resuming of one high priority service affects a plurality of low priority services. If the set value of variable 2 is smaller than an unset value of variable 2, it represents that the user concerns the situation that the resuming of one high priority service affects the plurality of low priority services. Therefore, if the resuming of one high priority service affects the plurality of low priority services, the high priority service, even a concatenation service, is preferably lost. If the set value of variable 2 is greater than an unset value of variable 2, the configured parameter of variable 2, that is, a user policy, is just the opposite.

It can be known from the above description that, by expanding the route, the necessary information required in the service preemption may be flooded. Through the setting of variable 1 and variable 2 by the user, different user-configured information may be selected, that is, different user policies may be selected. Then, the routing unit or the PCS computes a path having the minimum RCL value through the RCL computation formula. The path is the resuming path for the finally failed high priority service.

In the embodiments of the present invention, through the RCL routing algorithm, when the preemption may affect a plurality of LSPs having the same concatenation hierarchy and a plurality of LSPs having different concatenation hierarchies, the user is enabled to consider and balance between the situation of focusing on the success ratio of establishing or resuming the high priority services and the situation of reducing the possible effects on existing services.

Finally, it should be noted that, the above embodiments are merely provided for describing the technical solutions of the present invention, but not intended to limit the present invention. It should be understood by persons of ordinary skill in the art that although the present invention has been described in detail with reference to the foregoing embodiments, modifications can be made to the technical solutions described in the foregoing embodiments, or equivalent replacements can be made to some technical features in the technical solutions, as long as such modifications or replacements do not cause the essence of corresponding technical solutions to depart from the scope of the present invention.

**Claims**

1. A method for establishing a service path, comprising:

   receiving a new path establishing request or a re-routing request;
   acquiring a link resource using situation and user-configured information, wherein the link resource using situation at least comprises a link resource occupancy situation, a situation of the link resource used by priority services, a situation of the link resource used by a label switching path, LSP, and a concatenation hierarchy of the LSP occupying the link resource;
   computing a path according to the link resource using situation and the user-configured information, so as to acquire display routing information; wherein the path is computed by adopting a relative capability loss, RCL, routing algorithm, and the routing algorithm adopts a formula:

$$\mathrm{RCL\ value} =$$

$$\cdot \sum_{i=1}^{l} (\mathrm{variable}\,1 \times \mathrm{concatenation\ hierarchy\ of\ } i^{\mathrm{th}} \mathrm{\ to\ be\ preempted\ } LSP \mathrm{\ with\ different\ concatenation\ hierarchies})$$

$$+ \sum_{i=1}^{m} (\mathrm{constant}\,1 / i^{\mathrm{th}} \mathrm{\ hop\ available\ bandwidth}) + \sum_{i=1}^{n} (\mathrm{variable}\,2 \times \mathrm{priority\ of\ } i^{\mathrm{th}} \mathrm{\ to\ be\ preempted\ } LSP)$$

$$+ (\mathrm{constant\ 2} \times \mathrm{hop\ count\ p}),$$

   wherein

   RCL represents a relative capability loss; 1 represents an amount of LSPs having different concatenation hierarchies to be preempted, m represents an available bandwidth of used idle links, n represents an amount of all LSPs to be preempted, comprising LSPs having the same concatenation hierarchy and the LSPs having different concatenation hierarchies, and p represents a total hop count; variable 1 and variable 2 are the user-configured information according to a preemption policy; and constant 1 and constant 2 are constant values, wherein the display routing information is display routing information of a path having a minimum RCL value; and sending a path establishing command according to the display routing information, and establishing the service path according to the path establishing command.

2. The method according to claim 1, wherein the priority services are divided into high priority services, medium priority services, and low priority services, the high priority services preempt the low priority services, and the medium priority services are not able to preempt the others and are not able to be preempted.

3. The method according to claim 1, wherein the display routing information is display routing information of a path having a minimum RCL value.

4. The method according to claim 1, wherein the establishing the service path further comprises: determining whether a link of a low priority service is preempted; if a determining result is no, establishing the service path on an unused link; and if the determining result is yes, releasing a link of the preempted low priority service, and establishing the service path on the released link.

5. The method according to claim 4, wherein after releasing the link connection, the method further comprises: saving information about the released link, notifying all nodes on a path of the preempted low priority service, triggering an alarm to be turned off, and updating a state of the released link to be preempted.

6. The method according to claim 4, further comprising: resuming the preempted low priority service to a link before being preempted, when a preempting service is deleted or returns to an original path, notifying all nodes on a path of the preempted low priority service, triggering an alarm to be turned on, and updating a state of the resumed link to be un-preempted.

7. A system for establishing a service path, comprising:

  a user (202), adapted to send a new path establishing request and user-configured information;
  a protocol control unit (201), adapted to flood a link resource using situation and send a re-routing request, wherein the link resource using situation at least comprises a link resource occupancy situation, a situation of the link resource used by priority services, a situation of the link resource used by a label switching path, LSP, and a concatenation hierarchy of the LSP occupying the link resource; and
  a service node (203), connected to the protocol control unit (201), adapted to receive the new path establishing request or the re-routing request, compute a path according to the acquired link resource using situation and user-configured information, so as to acquire display routing information, send a path establishing command according to the display routing information, and establish the service path according to the path establishing command; wherein the path is computed by adopting a relative capability loss, RCL, routing algorithm, and the routing algorithm adopts a formula:

$$\text{RCL value} =$$

$$\cdot \sum_{i=1}^{l} (\text{variable1} \times \text{concatenation hierarchy of } i^{\text{th}} \text{ to be preempted } LSP \text{ with different concatenation hierarchies})$$

$$+ \sum_{i=1}^{m} (\text{constant1} / i^{\text{th}} \text{ hop available bandwidth}) + \sum_{i=1}^{n} (\text{variable2} \times \text{priority of } i^{\text{th}} \text{ to be preempted } LSP)$$

$$+ (\text{constant 2} \times \text{hop count p}),$$

  wherein
  RCL represents a relative capability loss; 1 represents an amount of LSPs having different concatenation hierarchies to be preempted, m represents an available bandwidth of used idle links, n represents an amount of all LSPs to be preempted, comprising LSPs having the same concatenation hierarchy and the LSPs having different concatenation hierarchies, and p represents a total hop count; variable 1 and variable 2 are the user-configured information according to a preemption policy; and constant 1 and constant 2 are constant values, wherein the display routing information is display routing information of a path having a minimum RCL value.

8. The system according to claim 7, wherein the service node (203) further comprises a service first node and at least one downstream node on a path of the service first node, and the service first node at least comprises:

a signaling unit (203a), adapted to receive the new path establishing request or the re-routing request, and trigger to send a path computation request, and adapted to send the path establishing command according to the display routing information;

a routing unit (203b), adapted to receive the path computation request, acquire the link resource using situation and the user-configured information, compute the path according to the link resource using situation and the user-configured information, so as to acquire the display routing information, and transfer the display routing information to the signaling unit (203a); and

a connection management unit (203d), adapted to receive the path establishing command, and establish the service path;

wherein the protocol control unit (201) is further adapted to receive and forward the path establishing command; and

the downstream node is adapted to receive the path establishing command forwarded by the protocol control unit (201), and establish the service path.

9. The system according to claim 7 or 8, wherein the priority services are divided into high priority services, medium priority services, and low priority services, the high priority services preempt the low priority services, and the medium priority services are not able to preempt the others and are not able to be preempted.

10. The system according to claim 8, wherein the downstream node at least comprises:

a downstream node signaling unit, adapted to receive the path establishing command forwarded by the protocol control unit, and send the path establishing command; and

a downstream node connection management unit, adapted to receive the path establishing command transferred by the downstream node signaling unit, and establish the service path.

11. A node device, comprising:

a signaling unit (203a), adapted to receive a new path establishing request or a re-routing request, and trigger to send a path computation request, and adapted to receive display routing information acquired after a path is computed, and send a path establishing command according to the display routing information;

a routing unit (203b), adapted to receive the path computation request, acquire a link resource using situation and user-configured information, compute the path according to the link resource using situation and the user-configured information, so as to acquire the display routing information, and transfer the display routing information to the signaling unit (203a), wherein the link resource using situation at least comprises a link resource occupancy situation, a situation of the link resource used by priority services, a situation of the link resource used by a label switching path, LSP, and a concatenation hierarchy of the LSP occupying the link resource; wherein the path is computed by adopting a relative capability loss, RCL, routing algorithm, and the routing algorithm adopts a formula:

$$\text{RCL value}=$$

$$\cdot \sum_{i=1}^{l} (\text{variable1} \times \text{concatenation hierarchy of } i^{\text{th}} \text{ to be preempted } LSP \text{ with different concatenation hierarchies})$$

$$+ \sum_{i=1}^{m} (\text{constant1} / i^{\text{th}} \text{ hop available bandwidth} + \sum_{i=1}^{n} (\text{variable2} \times \text{priority of } i^{\text{th}} \text{ to be preempted } LSP)$$

$$+ (\text{constant 2} \times \text{hop count p}),$$

wherein

RCL represents a relative capability loss; 1 represents an amount of LSPs having different concatenation hierarchies to be preempted, m represents an available bandwidth of used idle links, n represents an amount of all LSPs to be preempted, comprising LSPs having the same concatenation hierarchy and the LSPs having different concatenation hierarchies, and p represents a total hop count; variable 1 and variable 2 are the user-configured information according to a preemption policy; and constant 1 and constant 2 are constant values, wherein the display routing information is display routing information of a path having a minimum RCL value; and a connection management unit (203d), adapted to receive the path establishing command, and establish a service path.

12. The device according to claim 11, wherein the priority services are divided into high priority services, medium priority services, and low priority services, the high priority services preempt the low priority services, and the medium priority services are not able to preempt the others and are not able to be preempted.

**Patentansprüche**

1. Verfahren zum Aufbauen eines Dienstpfads, das Folgendes umfasst:

Empfangen einer neuen Pfadaufbauanforderung oder einer Neulenkungsanforderung; Erfassen einer Übertragungsstreckenbetriebsmittelverwendungssituation und anwenderkonfigurierter Informationen, wobei die Übertragungsstreckenbetriebsmittelverwendungssituation wenigstens eine Übertragungsstreckenbetriebsmittelbelegungssituation, eine Situation der Übertragungsstreckenbetriebsmittel, die durch Prioritätsdienste verwendet werden, eine Situation der Übertragungsstreckenbetriebsmittel, die durch einen etikettenvermittelten Pfad (label switching path, LSP) verwendet werden, und eine Verkettungshierarchie des LSP, der die Übertragungsstreckenbetriebsmittel besetzt, umfasst;
Berechnen eines Pfads gemäß der Übertragungsstreckenbetriebsmittelverwendungssituation und den anwenderkonfigurierten Informationen, um Anzeigelenkungsinformationen zu erfassen; wobei der Pfad durch Einsetzen eines relativen Leistungsverlust-Lenkungsalgorithmus (relative capability loss routing algorithm, RCL-Lenkungsalgorithmus) berechnet wird und der Lenkungsalgorithmus eine Formel einsetzt:

$$RCL\text{-}Wert =$$

$$\sum_{i=1}^{l}\left(\text{Variable 1} \times \text{Verkettungshierarchie des i-ten vorher zu belegenden LSP mit unterschiedlichen Verkettungshierarchien}\right)$$

$$+\sum_{i=1}^{h}\left(\text{Konstante 1/im i-ten Sprung verfügbare Bandbreite}\right)$$

$$+\sum_{i=1}^{n}\left(\text{Variable 2} \times \text{Priorität des i-ten vorher zu belegenden LSP}\right)$$

$$+\left(\text{Konstante 2} \times \text{Sprungzählwert p}\right),$$

wobei

RCL einen relativen Leistungsverlust repräsentiert; 1 eine Menge von vorher zu belegenden LSPs, die unterschiedliche Verkettungshierarchien aufweisen, repräsentiert, m eine verfügbare Bandbreite verwendeter freier Übertragungsstrecken repräsentiert, n eine Menge aller vorher zu belegenden LSPs repräsentiert, die LSPs, die dieselbe Verkettungshierarchie aufweisen, und die LSPs, die unterschiedliche Verkettungshierarchien aufweisen, umfasst, und p einen gesamten Sprungzählwert repräsentiert; Variable 1 und Variable 2 die anwenderkonfigurierten Informationen gemäß einer Vorbelegungsstrategie sind; und Konstante 1 und Konstante 2 konstante Werte sind, wobei die Anzeigelenkungsinformationen Anzeigelenkungsinformationen eines Pfads sind, der einen kleinsten RCL-Wert aufweist; und
Senden eines Pfadaufbaubefehls gemäß den Anzeigelenkungsinformationen und Aufbauen des Dienstpfads gemäß dem Pfadaufbaubefehl.

2. Verfahren nach Anspruch 1, wobei die Prioritätsdienste in Hochprioritätsdienste, Mittelprioritätsdienste und Niederprioritätsdienste unterteilt sind, wobei die Hochprioritätsdienste die Niederprioritätsdienste vorbelegen und die Mittelprioritätsdienste die anderen nicht vorbelegen können und nicht vorbelegt werden können.

3. Verfahren nach Anspruch 1, wobei die Anzeigelenkungsinformationen Anzeigelenkungsinformationen eines Pfads, der einen kleinsten RCL-Wert aufweist, sind.

4. Verfahren nach Anspruch 1, wobei das Aufbauen des Dienstpfads ferner Folgendes umfasst: Bestimmen, ob eine Übertragungsstrecke eines Niederprioritätsdienstes vorbelegt ist; falls ein Bestimmungsergebnis nein ist, Aufbauen des Dienstpfads auf einer ungenutzten Übertragungsstrecke; und falls das Bestimmungsergebnis ja ist, Freigeben einer Übertragungsstrecke des vorbelegten Niederprioritätsdienstes und Aufbauen des Dienstpfads auf der freigegebenen Übertragungsstrecke.

5. Verfahren nach Anspruch 4, wobei nach dem Freigeben der Übertragungsstrecke das Verfahren ferner Folgendes umfasst: Speichern von Informationen über die freigegebene Übertragungsstrecke, Benachrichtigen aller Knoten auf einem Pfad des vorbelegten Niederprioritätsdienstes, Initiieren, dass ein Alarm abgeschaltet wird, und Aktualisieren eines Zustands der freigegebenen Übertragungsstrecke, die vorbelegt werden soll.

6. Verfahren nach Anspruch 4, das ferner Folgendes umfasst: Wiederaufnehmen des vorbelegten Niederprioritätsdienstes auf einer Übertragungsstrecke vor dem Vorbelegen, wenn ein Vorbelegungsdienst gelöscht wird oder zu einem ursprünglichen Pfad zurückkehrt, Benachrichtigen aller Knoten eines Pfads des vorbelegten Niederprioritätsdienstes, Initiieren, dass ein Alarm angeschaltet wird, und Aktualisieren eines Zustands der wiederaufgenommenen Übertragungsstrecke, deren Vorbelegung aufgehoben werden soll.

7. System zum Aufbauen eines Dienstpfads, das Folgendes umfasst:

einen Anwender (202), der ausgelegt ist, eine neue Pfadaufbauanforderung und anwenderkonfigurierte Informationen zu senden;
eine Protokollsteuerungseinheit (201), die ausgelegt ist, eine Übertragungsstreckenbetriebsmittelverwendungssituation zu verbreiten und eine Neulenkungsanforderung zu senden, wobei die Übertragungsstreckenbetriebsmittelverwendungssituation wenigstens eine Übertragungsstreckenbetriebsmittelbelegungssituation, eine Situation der Übertragungsstreckenbetriebsmittel, die durch Prioritätsdienste verwendet werden, eine Situation der Übertragungsstreckenbetriebsmittel, die durch einen etikettenvermittelten Pfad, LSP, verwendet werden, und eine Verkettungshierarchie des LSP, der die Übertragungsstreckenbetriebsmittel besetzt, umfasst; und
einen Dienstknoten (203), der mit der Protokollsteuerungseinheit (201) verbunden ist und ausgelegt ist, die neue Pfadaufbauanforderung oder Neulenkungsanforderung zu empfangen, einen Pfad gemäß der erfassten Übertragungsstreckenbetriebsmittelverwendungssituation und anwenderkonfigurierten Informationen zu berechnen, um Anzeigelenkungsinformationen zu erfassen, einen Pfadaufbaubefehl gemäß den Anzeigelenkungsinformationen zu senden und den Dienstpfad gemäß dem Pfadaufbaubefehl aufzubauen; wobei der Pfad durch Einsetzen eines relativen Leistungsverlust-Lenkungsalgorithmus, RCL-Lenkungsalgorithmus, berechnet wird und der Lenkungsalgorithmus eine Formel einsetzt:

$$
\begin{aligned}
\text{RCL - Wert} =\ & \sum_{i=1}^{l}\left(\text{Variable 1} \times \text{Verkettungshierarchie des i-ten vorher zu belegenden LSP mit unterschiedlichen Verkettungshierarchien}\right) \\
& + \sum_{i=1}^{m}\left(\text{Konstante 1/im i-ten Sprung verfügbare Bandbreite}\right) \\
& + \sum_{i=1}^{n}\left(\text{Variable 2} \times \text{Priorität des i-ten vorher zu belegenden LSP}\right) \\
& + \left(\text{Konstante 2} \times \text{Sprungzählwert p}\right),
\end{aligned}
$$

wobei
RCL einen relativen Leistungsverlust repräsentiert; 1 eine Menge von vorher zu belegenden LSPs repräsentiert, die unterschiedliche Verkettungshierarchien aufweisen, m eine verfügbare Bandbreite verwendeter freier Übertragungsstrecken repräsentiert, n eine Menge aller vorher zu belegenden LSPs repräsentiert, die LSPs, die dieselbe Verkettungshierarchie aufweisen, und die LSPs, die unterschiedliche Verkettungshierarchien aufweisen, umfassen, und p einen gesamten Sprungzählwert repräsentiert; Variable 1 und Variable 2 die anwenderkonfigurierten Informationen gemäß einer Vorbelegungsstrategie sind; und Konstante 1 und Konstante 2 konstante Werte sind, wobei die Anzeigelenkungsinformationen Anzeigelenkungsinformationen eines Pfads sind, der einen kleinsten RCL-Wert aufweist.

8. System nach Anspruch 7, wobei der Dienstknoten (203) ferner einen ersten Dienstknoten und wenigstens einen nachgeordneten Knoten auf einem Pfad des ersten Dienstknotens umfasst, und der erste Dienstknoten wenigstens Folgendes umfasst:

eine Signalisierungseinheit (203a), die ausgelegt ist, die neue Pfadaufbauanforderung oder die Neulenkungsanforderung zu empfangen und zu initiieren, eine Pfadberechnungsanforderung zu senden, und ausgelegt ist, den Pfadaufbaubefehl gemäß den Anzeigelenkungsinformationen zu senden;

eine Lenkungseinheit (203b), die ausgelegt ist, die Pfadberechnungsanforderung zu empfangen, die Übertragungsstreckenbetriebsmittelverwendungssituation und die anwenderkonfigurierten Informationen zu erfassen, den Pfad gemäß der Übertragungsstreckenbetriebsmittelverwendungssituation und den anwenderkonfigurierten Informationen zu berechnen, um die Anzeigelenkungsinformationen zu erfassen, und die Anzeigelenkungsinformationen zu der Signalisierungseinheit (203a) zu übertragen; und

eine Verbindungsmanagementeinheit (203d), die ausgelegt ist, den Pfadaufbaubefehl zu empfangen und den Dienstpfad aufzubauen;

wobei die Protokollsteuerungseinheit (201) ferner ausgelegt ist, den Pfadaufbaubefehl zu empfangen und weiterzuleiten; und

der nachgeordnete Knoten ausgelegt ist, den durch die Protokollsteuerungseinheit (201) weitergeleiteten Pfadaufbaubefehl zu empfangen und den Dienstpfad aufzubauen.

9. System nach Anspruch 7 oder 8, wobei die Prioritätsdienste in Hochprioritätsdienste, Mittelprioritätsdienste und Niederprioritätsdienste unterteilt sind, wobei die Hochprioritätsdienste die Niederprioritätsdienste vorbelegen und die Mittelprioritätsdienste die anderen nicht vorbelegen können und nicht vorbelegt werden können.

10. System nach Anspruch 8, wobei der nachgeordnete Knoten wenigstens Folgendes umfasst:

eine Signalisierungseinheit des nachgeordneten Knotens, die ausgelegt ist, den durch die Protokollsteuerungseinheit weitergeleiteten Pfadaufbaubefehl zu empfangen und den Pfadaufbaubefehl zu senden; und

eine Verbindungsmanagementeinheit des nachgeordneten Knotens, die ausgelegt ist, den durch die Signalisierungseinheit des nachgeordneten Knotens übertragenen Pfadaufbaubefehl zu empfangen und den Dienstpfad aufzubauen.

11. Knotenvorrichtung, die Folgendes umfasst:

eine Signalisierungseinheit (203a), die ausgelegt ist, eine neue Pfadaufbauanforderung oder eine Neulenkungsanforderung zu empfangen und zu initiieren, dass eine Pfadberechnungsanforderung gesendet wird, und ausgelegt ist, Anzeigelenkungsinformationen, die erfasst werden, nachdem ein Pfad berechnet worden ist, zu empfangen und einen Pfadaufbaubefehl gemäß den Anzeigelenkungsinformationen zu senden;

eine Lenkungseinheit (203b), die ausgelegt ist, die Pfadberechnungsanforderung zu empfangen, eine Übertragungsstreckenbetriebsmittelverwendungssituation und anwenderkonfigurierte Informationen zu erfassen, den Pfad gemäß der Übertragungsstreckenbetriebsmittelverwendungssituation und den anwenderkonfigurierten Informationen zu berechnen, um die Anzeigelenkungsinformationen zu erfassen, und die Anzeigelenkungsinformationen zu der Signalisierungseinheit (203a) zu übertragen, wobei die Übertragungsstreckenbetriebsmittelverwendungssituation wenigstens eine Übertragungsstreckenbetriebsmittelbelegungssituation, eine Situation der Übertragungsstreckenbetriebsmittel, die durch Prioritätsdienste verwendet werden, eine Situation der Übertragungsstreckenbetriebsmittel, die durch einen etikettenvermittelten Pfad, LSP, verwendet werden, und eine Verkettungshierarchie des LSP, der die Übertragungsstreckenbetriebsmittel besetzt, umfasst; wobei der Pfad durch Einsetzen eines relativen Leistungsverlust-Lenkungsalgorithmus, RCL-Lenkungsalgorithmus, berechnet wird, und der Lenkungsalgorithmus eine Formel einsetzt:

$$\text{RCL - Wert} =$$

$$\sum_{i=1}^{l}\left(\text{Variable 1} \times \text{Verkettungshierarchie des i-ten vorher zu belegenden LSP mit unterschiedlichen Verkettungshierarchien}\right)$$

$$+\sum_{i=1}^{m}\left(\text{Konstante 1/im i-ten Sprung verfügbare Bandbreite}\right)$$

$$+\sum_{i=1}^{n}\left(\text{Variable 2} \times \text{Priorität des i-ten vorher zu belegenden LSP}\right)$$

$$+\left(\text{Konstante 2} \times \text{Sprungzählwert p}\right),$$

wobei

RCL einen relativen Leistungsverlust repräsentiert; 1 eine Menge von vorher zu belegenden LSPs repräsentiert, die unterschiedliche Verkettungshierarchien aufweisen, m eine verfügbare Bandbreite verwendeter freier Übertragungsstrecken repräsentiert, n eine Menge aller vorher zu belegenden LSPs repräsentiert, die LSPs, die dieselbe Verkettungshierarchie aufweisen, und die LSPs, die unterschiedliche Verkettungshierarchien aufweisen, umfassen, und p einen gesamten Sprungzählwert repräsentiert; Variable 1 und Variable 2 die anwenderkonfigurierten Informationen gemäß einer Vorbelegungsstrategie sind; und Konstante 1 und Konstante 2 konstante Werte sind, wobei die Anzeigelenkungsinformationen Anzeigelenkungsinformationen eines Pfads sind, der den kleinsten RCL-Wert aufweist; und
eine Verbindungsmanagementeinheit (203d), die ausgelegt ist, den Pfadaufbaubefehl zu empfangen und einen Dienstpfad aufzubauen.

**12.** Vorrichtung nach Anspruch 11, wobei die Prioritätsdienste in Hochprioritätsdienste, Mittelprioritätsdienste und Niederprioritätsdienste unterteilt sind, wobei die Hochprioritätsdienste die Niederprioritätsdienste vorbelegen und die Mittelprioritätsdienste die anderen nicht vorbelegen können und nicht vorbelegt werden können.

**Revendications**

**1.** Procédé d'établissement d'un trajet de service, comprenant :

la réception d'une demande d'établissement de nouveau trajet ou d'une demande de reroutage ;
l'acquisition d'une situation d'utilisation de ressource de liaison et d'informations configurées par l'utilisateur, dans lequel la situation d'utilisation de ressource de liaison comprend au moins une situation d'occupation de ressource de liaison, une situation de la ressource de liaison utilisée par des services prioritaires, une situation de la ressource de liaison utilisée par un trajet à commutation d'étiquette, LSP (Label Switching Path), et une hiérarchie de concaténation du trajet LSP occupant la ressource de liaison ;
le calcul d'un trajet conformément à la situation d'utilisation de ressource de liaison et
aux informations configurées par l'utilisateur, de manière à acquérir des informations de routage d'affichage ; dans lequel le trajet est calculé en utilisant un algorithme de routage à perte de capacité relative, RCL (Relative Capability Loss), et l'algorithme de routage utilise la formule suivante :

$$\text{Valeur RCL} =$$

$$\sum_{i=1}^{l}\left(\text{variable 1} \times \text{hiérarchie de concaténation du } i^{\text{ème}}\text{LSP à préempter avec des hiérarchies de concaténation différentes}\right)$$

$$+\sum_{i=1}^{m}\left(\text{constante 1 / bande passante disponible } i^{\text{ème}}\text{bond}\right) + \sum_{i=1}^{n}\left(\text{variable 2} \times \text{priorité du } i^{\text{ème}} \text{ LSP à préempter}\right)$$

$$+\left(\text{constante 2} \times \text{compte de bonds p}\right),$$

dans lequel

RCL représente une perte de capacité relative ; 1 représente une quantité de trajets LSP ayant des hiérarchies de concaténation différentes à préempter, m représente une bande passante disponible de liaisons inactives utilisées, n représente la quantité de tous les trajets LSP à préempter, comprenant des trajets LSP ayant la même hiérarchie de concaténation et les trajets LSP ayant des hiérarchies de concaténation différentes, et p représente un compte de bonds total ; la variable 1 et la variable 2 sont les informations configurées par l'utilisateur conformément à une politique de préemption, et la constante 1 et la constante 2 sont des valeurs constantes, dans lequel les informations de routage d'affichage sont des informations de routage d'affichage d'un traj et ayant une valeur RCL minimum ; et

l'envoi d'une commande d'établissement de trajet conformément aux informations de routage d'affichage, et l'établissement du trajet de service conformément à la commande d'établissement de trajet.

2. Procédé selon la revendication 1, dans lequel les services prioritaires sont divisés en des services de priorité élevée, des services de priorité intermédiaire et des services de faible priorité, les services de priorité élevée préemptent les services de faible priorité, et les services de priorité intermédiaire ne sont pas capables de préempter les autres et ne sont pas capables d'être préemptés.

3. Procédé selon la revendication 1, dans lequel les informations de routage d'affichage sont des informations de routage d'affichage d'un trajet ayant une valeur RCL minimum.

4. Procédé selon la revendication 1, dans lequel l'établissement du trajet de service comprend en outre : la détermination du fait de savoir si une liaison d'un service de faible priorité est préemptée ; si un résultat de la détermination est non, l'établissement du trajet de service sur une liaison inutilisée ; et si le résultat de la détermination est oui, la libération d'une liaison du service de faible priorité préempté, et l'établissement du trajet de service sur la liaison libérée.

5. Procédé selon la revendication 4, dans lequel, après la libération de la connexion de liaison, le procédé comprend en outre : la sauvegarde d'informations concernant la liaison libérée, la notification à tous les noeuds présents sur un trajet du service de faible priorité préempté, le déclenchement d'une alarme à désactiver, et la mise à jour d'un état de la liaison libérée à préempter.

6. Procédé selon la revendication 4, comprenant en outre : la reprise du service de faible priorité préempté sur une liaison utilisée avant la préemption, lorsqu'un service de préemption est supprimé ou revient sur un trajet initial, la notification de tous les noeuds présents sur un trajet du service de faible priorité préempté, le déclenchement d'une alarme à activer, et la mise à jour d'un état de la liaison reprise afin qu'elle soit non préemptée.

7. Système d'établissement d'un trajet de service, comprenant :

un utilisateur (202), apte à envoyer une demande d'établissement de nouveau trajet et des informations configurées par l'utilisateur ;
une unité de commande de protocole (201), apte à diffuser une situation d'utilisation de ressource de liaison et à envoyer une demande de reroutage, dans lequel la situation d'utilisation de ressource de liaison comprend au moins une situation d'occupation de ressource de liaison, une situation de la ressource de liaison utilisée par des services prioritaires, une situation de la ressource de liaison utilisée par un trajet à commutation d'étiquette, LSP, et une hiérarchie de concaténation du trajet LSP occupant la ressource de liaison ; et
un noeud de service (203), connecté à l'unité de commande de protocole (201), apte à recevoir la demande d'établissement de nouveau trajet ou la demande de reroutage, à calculer un trajet conformément à la situation d'utilisation de ressource de liaison acquise et aux informations acquises configurées par l'utilisateur, de manière à acquérir des informations de routage d'affichage, à envoyer une commande d'établissement de trajet conformément aux informations de routage d'affichage, et à établir le trajet de service conformément à la commande d'établissement de trajet ;
dans lequel le trajet est calculé en utilisant un algorithme de routage à perte de capacité relative, RCL, et l'algorithme de routage utilise la formule suivante :

$$\text{Valeur RCL} = \sum_{i=1}^{l} (\text{variable 1} \times \text{hiérarchie de concaténation du } i^{\text{ème}}\text{LSP à préempter avec des hiérarchies de concaténation différentes})$$
$$+ \sum_{i=1}^{m} (\text{constante 1 / bande passante disponible } i^{\text{ème}}\text{bond}) + \sum_{i=1}^{n} (\text{variable 2} \times \text{priorité du } i^{\text{ème}} \text{ LSP à préempter})$$
$$+ (\text{constante 2} \times \text{compte de bonds p}),$$

dans lequel
RCL représente une perte de capacité relative ; 1 représente une quantité de trajets LSP ayant des hiérarchies de concaténation différentes à préempter, m représente une bande passante disponible de liaisons inactives utilisées, n représente la quantité de tous les trajets LSP à préempter, comprenant des trajets LSP ayant la même hiérarchie de concaténation et les trajets LSP ayant des hiérarchies de concaténation différentes, et p représente un compte de bonds total ; la variable 1 et la variable 2 sont les informations configurées par l'utilisateur conformément à une politique de préemption, et la constante 1 et la constante 2 sont des valeurs constantes, dans lequel les informations de routage d'affichage sont des informations de routage d'affichage d'un traj et ayant une valeur RCL minimum.

8. Système selon la revendication 7, dans lequel le noeud de service (203) comprend en outre un premier noeud de service et au moins un noeud aval sur un trajet du premier noeud de service, et le premier noeud de service comprend au moins :

une unité de signalisation (203a), apte à recevoir la demande d'établissement de nouveau trajet ou la demande de reroutage, et à déclencher l'envoi d'une demande de calcul de trajet, et apte à envoyer la commande d'établissement de trajet conformément aux informations de routage d'affichage ;
une unité de routage (203b), apte à recevoir la demande de calcul de trajet, à acquérir la situation d'utilisation de ressource de liaison et les informations configurées par l'utilisateur, à calculer le trajet conformément à la situation d'utilisation de ressource de liaison et aux informations configurées par l'utilisateur, de manière à acquérir les informations de routage d'affichage, et à transférer les informations de routage d'affichage à l'unité de signalisation (203a) ; et
une unité de gestion de connexion (203d), apte à recevoir la commande d'établissement de trajet, et à établir le trajet de service ;
dans lequel l'unité de commande de protocole (201) est en outre apte à recevoir et à réacheminer la commande d'établissement de trajet ; et
le noeud aval est apte à recevoir la commande d'établissement de trajet réacheminée par l'unité de commande de protocole (201), et à établir le trajet de service.

9. Système selon la revendication 7 ou 8, dans lequel les services prioritaires sont divisés en des services de priorité élevée, des services de priorité intermédiaire et des services de faible priorité, les services de priorité élevée préemptent les services de faible priorité, et les services de priorité intermédiaire ne sont pas capables de préempter les autres et ne sont pas capables d'être préemptés.

10. Système selon la revendication 8, dans lequel le noeud aval comprend au moins :

une unité de signalisation de noeud aval, apte à recevoir la commande d'établissement de trajet réacheminée par l'unité de commande de protocole, et à envoyer la commande d'établissement de trajet ; et
une unité de gestion de connexion de noeud aval, apte à recevoir la commande d'établissement de trajet transférée par l'unité de signalisation de noeud aval, et à établir le trajet de service.

11. Dispositif de noeud, comprenant :

une unité de signalisation (203a), apte à recevoir une demande d'établissement de nouveau trajet ou une demande de reroutage, et à déclencher l'envoi d'une demande de calcul de trajet, et apte à recevoir des informations de routage d'affichage acquises après calcul d'un trajet, et à envoyer une commande d'établissement de trajet conformément aux informations de routage d'affichage ;
une unité de routage (203b), apte à recevoir la demande de calcul de trajet, à acquérir une situation d'utilisation de ressource de liaison et des informations configurées par l'utilisateur, à calculer le trajet conformément à la situation d'utilisation de ressource de liaison et aux informations configurées par l'utilisateur, de manière à acquérir les informations de routage d'affichage, et à transférer les informations de routage d'affichage à l'unité de signalisation (203a), dans lequel la situation d'utilisation de ressource de liaison comprend au moins une situation d'occupation de ressource de liaison, une situation de la ressource de liaison utilisée par des services prioritaires,

une situation de la ressource de liaison utilisée par un trajet à commutation d'étiquette, LSP, et une hiérarchie de concaténation du trajet LSP occupant la ressource de liaison ; dans lequel le trajet est calculé en utilisant un algorithme de routage à perte de capacité relative, RCL, et l'algorithme de routage utilise la formule suivante :

$$\text{Valeur RCL} = \sum_{i=1}^{l} (\text{variable 1} \times \text{hiérarchie de concaténation du } i^{ème} \text{LSP à préempter avec des hiérarchies de concaténation différentes})$$

$$+ \sum_{i=1}^{m} (\text{constante 1} / \text{bande passante disponible } i^{ème} \text{bond}) + \sum_{i=1}^{n} (\text{variable 2} \times \text{priorité du } i^{ème} \text{ LSP à préempter})$$

$$+ (\text{constante 2} \times \text{compte de bonds p}),$$

dans lequel

RCL représente une perte de capacité relative ; 1 représente une quantité de trajets LSP ayant des hiérarchies de concaténation différentes à préempter, m représente une bande passante disponible de liaisons inactives utilisées, n représente la quantité de tous les trajets LSP à préempter, comprenant des trajets LSP ayant la même hiérarchie de concaténation et les trajets LSP ayant des hiérarchies de concaténation différentes, et p représente un compte de bonds total ; la variable 1 et la variable 2 sont les informations configurées par l'utilisateur conformément à une politique de préemption, et la constante 1 et la constante 2 sont des valeurs constantes, dans lequel les informations de routage d'affichage sont des informations de routage d'affichage d'un traj et ayant une valeur RCL minimum ; et

une unité de gestion de connexion (203d), apte à recevoir la commande d'établissement de trajet, et à établir un trajet de service.

**12.** Dispositif selon la revendication 11, dans lequel les services prioritaires sont divisés en des services de priorité élevée, des services de priorité intermédiaire et des services de faible priorité, les services de priorité élevée préemptent les services de faible priorité, et les services de priorité intermédiaire ne sont pas capables de préempter les autres et ne sont pas capables d'être préemptés.

FIG. 1

FIG. 2

FIG. 3

**EP 2 154 841 B1**

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- CN 1960341 A
- WO 2006119010 A2